# FASCICULE DE BREVET EUROPEEN

(11) **EP 2 636 119 B1**
(45) Date de publication et mention de la délivrance du brevet: **10.12.2014**
(21) Numéro de dépôt: 11832138.9
(22) Date de dépôt: 28.10.2011
(51) Int. Cl.: H02J 7/35, E06B 9/68

(54) **PILOTAGE DE SYSTEMES DYNAMIQUES PAR MESURE DE TENSION A VIDE D'UN GENERATEUR PHOTOVOLTAÏQUE**
STEUERUNG DYNAMISCHER SYSTEME DURCH MESSUNG DER LEERLAUFSPANNUNG EINES PHOTOVOLTAIK-GENERATORS
CONTROLLING DYNAMIC SYSTEMS BY MEASURING THE NO-LOAD VOLTAGE OF A PHOTOVOLTAIC GENERATOR

(30) Priorité: 02.11.2010 FR 1059016
(43) Date de publication de la demande: 11.09.2013
(73) Titulaire: BUBENDORFF, 68220 Attenschwiller (FR); Commissariat à l'Énergie Atomique et aux Énergies Alternatives, 75015 Paris (FR)
(72) Inventeur: RENZI, Virginie, F - 73000 Chambery (FR); CHAINTREUIL, Nicolas, F - 73800 Montmelian (FR); DELPY, Vincent, F - 68150 Sierentz (FR); PERICHON, Pierre, F - 38500 Voiron (FR)
(74) Mandataire: Rhein, Alain
(86) Numéro de dépôt international: PCT/FR2011/052534
(87) Numéro de publication internationale: WO 2012/059672

(56) Documents cités:
- DE-A1- 3 408 396
- DE-A1- 4 208 469
- US-A1- 2006 000 558

## Description

La présente invention concerne un procédé pour le pilotage d'un système dynamique que comporte un équipement dynamique, ceci en fonction de l'ensoleillement.

Cette invention a, également, trait à un équipement dynamique comportant un système dynamique, un générateur photovoltaïque ainsi qu'un dispositif pour piloter cet équipement dynamique en fonction de l'ensoleillement.

Cette invention concerne le domaine de la fabrication des équipements dynamiques autonomes en énergie et comportant un système dynamique, un générateur photovoltaïque ainsi qu'une batterie alimentée en énergie électrique par le générateur photovoltaïque et alimentant en énergie électrique le système dynamique.

On connaît, d'ores et déjà, des équipements dynamiques de ce type et adoptant la forme d'un dispositif d'occultation comme un store ou analogue.

En particulier, dans le document US-5.675.487 il est décrit un dispositif pour contrôler l'énergie au travers d'une vitre. Ce dispositif comporte un store, constituant un système dynamique, des générateurs photovoltaïques, une batterie ainsi que des capteurs de luminosité conçus pour capter la lumière du soleil et fournissant une information sur la base de laquelle le système dynamique est piloté.

On connaît, également, le document FR-2.740.825 relatif à une installation de commande d'éléments de protection solaire. Une telle installation comporte des éléments de protection solaire ainsi que des moyens pour actionner ces éléments. Cette installation comporte, également, un système automatique de contrôle de l'ombre. Ce système comporte un capteur, déporté par rapport aux actionneurs, et équipé de moyens de mesure de l'intensité du rayonnement solaire et de moyens de mesure d'au moins un autre phénomène météorologique. Ce système comporte, encore, des moyens d'alimentation du capteur en énergie électrique, ces moyens d'alimentation étant, notamment, constitués par un générateur photovoltaïque.

Dans le document WO2010/079407 il est décrit un procédé de fonctionnement d'une installation domotique de protection solaire motorisé. Cette installation comporte un store, un générateur photovoltaïque servant de capteur d'énergie, une batterie ainsi qu'un capteur solaire déporté qui, en cas de détection d'un ensoleillement direct, pilote le déploiement du store. Le document DE 3408396 montre un procédé suivant le préambule de la revendication 1. Dans ce procédé le générateur photovoltaïque est utilisé comme détecteur d'ensoleillement.

Quoi qu'il en soit, les équipements dynamiques de l'état de la technique comportent, d'une part, un générateur photovoltaïque usuellement employé pour charger en énergie électrique une batterie destinée à alimenter un système dynamique que comporte un tel élément dynamique et, d'autre part, un capteur solaire, conçu pour détecter un rayonnement solaire dans le but de piloter le système dynamique, venant s'ajouter au générateur photovoltaïque et déporté par rapport au système dynamique.

Outre le fait qu'un tel capteur solaire constitue un élément additionnel de l'équipement dynamique, celui-ci peut être déporté par rapport au système dynamique et être, alors, positionné en un endroit non représentatif des conditions environnantes de ce système dynamique, notamment dans une zone ombrée. De plus, un tel capteur est usuellement éloigné du système dynamique à piloter de sorte qu'il convient d'assurer la transmission de l'information captée par ce capteur à ce système dynamique. Une telle transmission peut être réalisée, soit par une liaison filaire nécessitant un câble électrique, peu pratique à mettre en place, voire disgracieux, soit une liaison radio ou wifi nécessitant au moins un récepteur au niveau du système dynamique et représentant une solution plus onéreuse que la liaison filaire.

La présente invention se veut à même de remédier aux inconvénients des équipements dynamiques de l'état de la technique.

A cet effet, l'invention concerne un procédé pour le pilotage, en fonction de l'ensoleillement, d'un système dynamique que comporte un équipement dynamique lequel comporte encore au moins un générateur photovoltaïque, au moins une batterie pour le stockage de l'énergie électrique fournie par le générateur photovoltaïque et pour l'alimentation en énergie électrique d'un système dynamique ainsi qu'au moins un dispositif pour le pilotage de cet équipement dynamique.

Ce procédé consiste en ce que :
- on isole électriquement le générateur photovoltaïque par rapport à la batterie ;
- on relève la tension à vide Vo du générateur photovoltaïque ;
- à partir de la tension à vide relevée Vo, on détermine une valeur numérique Vpv correspondant à cette tension à vide relevée Vo et on compare cette valeur numérique déterminée Vpv à au moins une valeur seuil de référence (Vseuil1 ; Vseuil2) ;
- lorsque cette valeur numérique déterminée Vpv correspond à une gamme de valeurs limitée par au moins une telle valeur seuil de référence (Vseuil1 ; Vseuil2), on pilote le système dynamique pour lui conférer une configuration correspondant à cette gamme de valeurs.

De manière additionnelle, le procédé consiste, encore, en ce que, avant de piloter le système dynamique :
- on isole électriquement le générateur photovoltaïque par rapport à la batterie ;
- on relève le courant de court-circuit Icc du générateur photovoltaïque isolé ;
- à partir d'au moins un relevé de courant de court-circuit Icc, on détermine une valeur numérique Ipv correspondant à ce ou ces relevés de courant de court-circuit Icc;
- et, lorsqu'on pilote le système dynamique, on pilote ce système dynamique pour lui conférer une configuration déterminée en fonction d'au moins une des valeurs numériques déterminées Vpv et/ou Vpv et Ipv.

L'invention concerne, également, un équipement dynamique, notamment pour la mise en oeuvre du procédé selon l'une quelconque des revendications précédentes, comportant un système dynamique, un générateur photovoltaïque, une batterie alimentée en énergie électrique par le générateur photovoltaïque et alimentant en énergie électrique le système dynamique, au moins un dispositif pour piloter l'équipement dynamique en fonction de l'ensoleillement.

Cet équipement dynamique est caractérisé par le fait que le dispositif pour piloter l'équipement dynamique comporte au moins :
- un moyen pour isoler électriquement le générateur photovoltaïque par rapport à la batterie ;
- un moyen pour relever la tension à vide Vo du générateur photovoltaïque ;
- un moyen pour déterminer une valeur numérique Vpv correspondant à cette tension à vide relevée Vo ;
- un moyen pour comparer cette valeur numérique déterminée Vpv à au moins une valeur seuil de référence (Vseuil1 ; Vseuil2);
- un moyen pour commander au moins le moyen pour isoler électriquement, le moyen pour déterminer une valeur numérique Vpv ainsi que le moyen pour comparer ;
- un moyen pour piloter le système dynamique en fonction du résultat de la comparaison entre cette valeur numérique déterminée Vpv et au moins une telle valeur seuil de référence (Vseuil1 ; Vseuil2).

De manière additionnelle, cet équipement dynamique comporte, encore :
- un moyen pour isoler électriquement le générateur photovoltaïque par rapport à la batterie ;
- un moyen pour relever le courant de court-circuit Icc du générateur photovoltaïque ;
- un moyen pour déterminer une valeur numérique Ipv correspondant à au moins un relevé de courant de court-circuit Icc;
- un moyen pour comparer cette valeur numérique déterminée Ipv à au moins une valeur seuil de référence (Iseuill ; Iseuil2);
- un moyen pour commander au moins ledit moyen pour isoler électriquement, ledit moyen pour déterminer une valeur numérique Ipv ainsi que ledit moyen pour comparer ;
- un moyen pour piloter le système dynamique en fonction du résultat de la comparaison entre cette valeur numérique déterminée Ipv et au moins une telle valeur seuil de référence (Iseuil1 ; Iseuil2).

La présente invention consiste à relever la tension à vide du générateur photovoltaïque et, à partir de cette tension à vide relevée, à piloter l'équipement dynamique, plus particulièrement le système dynamique que comporte cet équipement dynamique. Cette invention consiste, alors avantageusement, à mettre à profit une grandeur électrique fournie directement par le générateur photovoltaïque pour piloter cet équipement dynamique et non plus, comme dans l'état de la technique, à devoir faire appel à un capteur additionnel qui plus est déporté pour assurer un tel pilotage.

En particulier, la mesure de la tension à vide permet, avantageusement, de détecter le lever/coucher du soleil et, ainsi, d'assurer un pilotage crépusculaire de l'équipement dynamique.

Dans le cas particulier d'un équipement dynamique constitué par un dispositif d'occultation, notamment un volet roulant ou analogue, l'utilisation de la tension à vide du générateur photovoltaïque permet, avantageusement, d'assurer une ouverture/fermeture crépusculaire d'un système dynamique, plus particulièrement constitué par un tablier de volet roulant.

La présente invention consiste, également, à relever au moins un courant de court-circuit du générateur photovoltaïque et, à partir d'au moins un relevé de courant de court-circuit, à piloter l'équipement dynamique. Là encore l'invention consiste à mettre à profit une grandeur fournie directement par le générateur photovoltaïque pour piloter l'équipement dynamique. Dans le cas particulier d'un équipement dynamique constitué par un dispositif d'occultation, le pilotage de cet équipement dynamique en fonction du courant de court-circuit permet, avantageusement, d'assurer une fermeture partielle ou avec ajours du système dynamique, plus particulièrement constitué par un tablier de volet roulant.

Quoi qu'il en soit, la présente invention permet, avantageusement, de piloter un équipement dynamique (plus particulièrement un système dynamique que comporte un tel équipement dynamique), ceci à partir de grandeurs électriques fournies directement par le générateur photovoltaïque et non pas, comme dans l'état de la technique, par un capteur additionnel, voire déporté.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée et en élévation d'un équipement dynamique constitué par un volet roulant ;
- la figure 2 est un graphique représentant, en fonction du temps, l'évolution du rayonnement solaire résultant d'une irradiation solaire et de la tension à vide d'un générateur photovoltaïque soumis à cette irradiation solaire ;
- la figure 3 correspond à un agrandissement du graphique représenté figure 2 ;
- la figure 4 est un graphique représentant, en fonction du temps, l'évolution du rayonnement solaire résultant d'une irradiation solaire et du courant de court circuit d'un générateur photovoltaïque soumis à cette irradiation solaire ;
- la figure 5 est représentation synoptique d'un équipement dynamique conforme à l'invention ;
- la figure 6 est une représentation synoptique d'un équipement dynamique conforme à l'invention et correspondant à un mode de réalisation plus évolué que celui illustré figure 5 ;
- la figure 7 est un logigramme illustrant le procédé de pilotage d'un équipement dynamique en fonction de l'ensoleillement.

La présente invention concerne le domaine de la fabrication des équipements dynamiques autonomes en énergie.

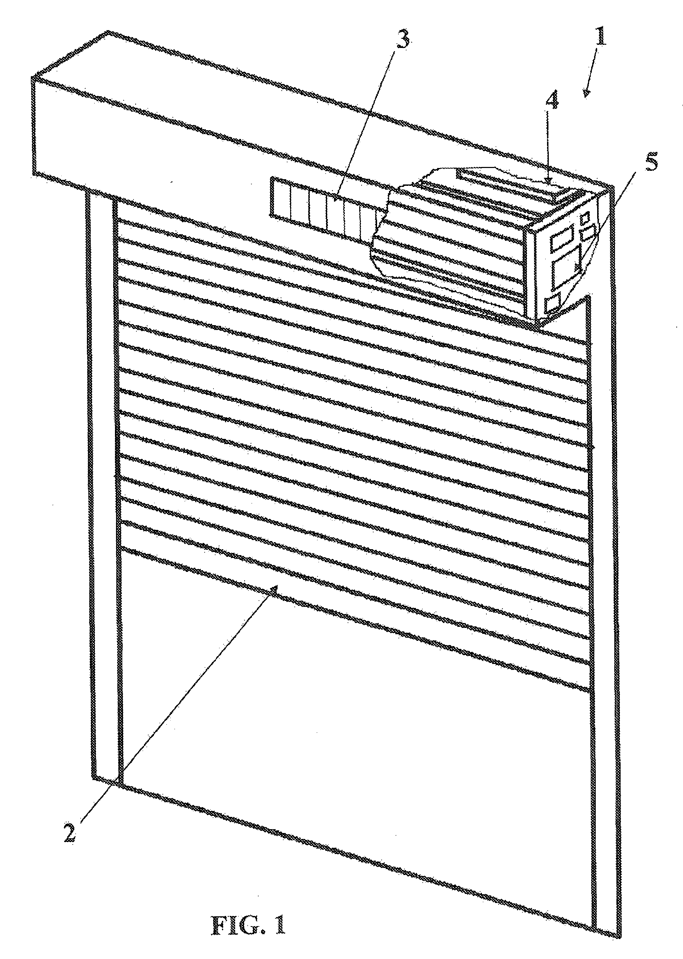

De manière non limitative, un tel équipement dynamique peut être constitué par un équipement de chauffage, un équipement de climatisation, un équipement de ventilation, un équipement de gestion de l'énergie centralisée (de type GTB, GTC ou autre), un équipement de protection solaire ou autre. Un tel équipement dynamique peut, encore, être constitué par un volet roulant qui correspond à un mode particulier de réalisation d'un tel équipement dynamique auquel il sera plus particulièrement fait référence dans la suite de la description et qui a été illustré figure 1.

Quel que soit cet équipement dynamique 1, celui-ci comporte un système dynamique 2 qui, dans le cas particulier d'un volet roulant, est constitué par au moins un tablier résultant de l'assemblage d'une pluralité de lames, voire encore par un arbre motorisé sur lequel est enroulé et à partir duquel est déroulé ledit tablier.

Un tel équipement dynamique 1 comporte, encore, un générateur photovoltaïque 3, plus particulièrement constitué par au moins un panneau photovoltaïque, qui, dans le cas particulier d'un volet roulant, peut être rapporté sur un caisson que comporte ce volet roulant et qui incorpore ledit arbre motorisé.

Un tel équipement dynamique 1 comporte, également, une batterie 4, alimentée en énergie électrique par le générateur photovoltaïque, et alimentant en énergie électrique le système dynamique 2. Dans le cas particulier d'un volet roulant, une telle batterie 4 est, là encore, implantée dans le caisson.

Finalement, cet équipement dynamique 1 comporte un dispositif 5 pour le pilotage de cet équipement dynamique. Un mode de réalisation préféré consiste en ce qu'un tel dispositif de pilotage 5 est au moins en partie constitué par une carte électronique, notamment implantée à l'intérieur d'un caisson de volet roulant.

Tel que mentionné ci-dessus, un tel équipement dynamique 1 comporte un générateur photovoltaïque 3 conçu pour recevoir une irradiation solaire et pour fournir de l'énergie électrique à ladite batterie 4 sous l'effet de cette irradiation solaire.

Selon une première démarche inventive, il a été imaginé de relever, aux bornes de ce générateur photovoltaïque 3, une tension à vide Vo délivrée sous l'effet d'une irradiation solaire.

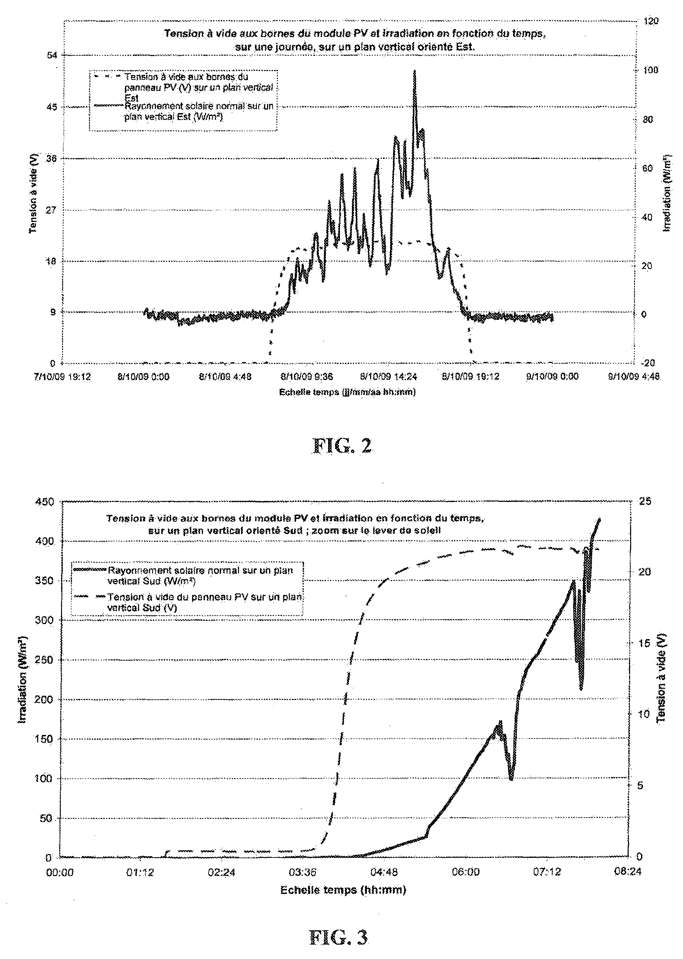

Ainsi, sur les graphiques faisant l'objet des figures 2 et 3, il a été représenté, en fonction du temps, l'évolution de cette tension à vide Vo (en Volts), ceci au cours d'une journée et sous l'effet d'une telle irradiation solaire.

Sur ces mêmes graphiques des figures 2 et 3, il a été représenté, là encore en fonction du temps, l'évolution du rayonnement solaire (mesuré à l'aide d'un pyranomètre ou analogue et donné en W/m2) auquel est soumis le générateur photovoltaïque 3, ceci au cours de cette même journée et sous l'effet de cette même irradiation solaire.

La représentation conjointe de l'évolution de la tension à vide Vo et du rayonnement solaire a permis de mettre en évidence que :
- l'augmentation du rayonnement solaire, correspondant au lever du soleil, correspond, sensiblement, à une augmentation de la tension à vide Vo du générateur photovoltaïque 3;
- la diminution du rayonnement solaire, correspondant au coucher du soleil, correspond, sensiblement, à une diminution de cette tension à vide Vo.

La corrélation entre le rayonnement solaire et la tension à vide Vo du générateur photovoltaïque 3 a conduit les inventeurs à développer la présente invention consistant à piloter le fonctionnement d'un équipement dynamique 1 en fonction de l'ensoleillement, ceci sur la base de mesures de tension à vide Vo aux bornes du générateur photovoltaïque 3.

Selon une deuxième démarche inventive, il a été imaginé de relever le courant de court circuit Icc du générateur photovoltaïque 3, ceci sous l'effet d'une irradiation solaire.

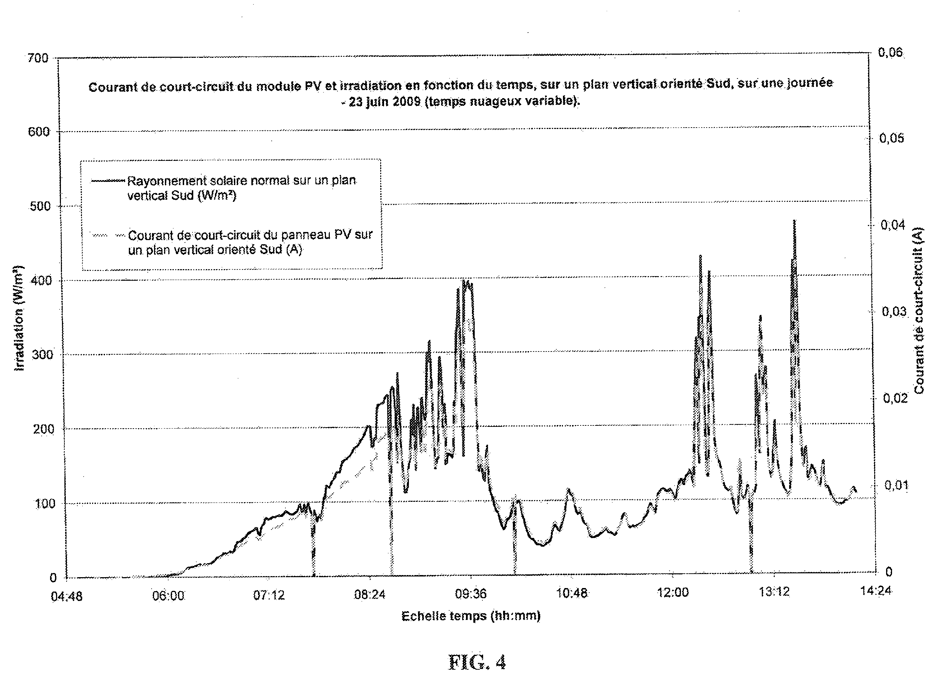

Aussi, sur un graphique faisant l'objet de la figure 4, il a été représenté, en fonction du temps, l'évolution de ce courant de court-circuit Icc (en Ampère), ceci au cours d'une journée et sous l'effet d'une telle irradiation solaire.

Sur ce même graphique de la figure 4, il a été représenté, là encore en fonction du temps, l'évolution du rayonnement solaire (là encore mesuré à l'aide d'un pyranomètre ou analogue et donné en W/m2) auquel était soumis le générateur photovoltaïque 3, ceci au cours de cette même journée et sous l'effet de cette même irradiation solaire.

La représentation conjointe de l'évolution du courant de court-circuit Icc et du rayonnement solaire a permis de mettre en évidence une corrélation directe entre ces deux grandeurs.

Cette corrélation a conduit les inventeurs à développer la présente invention consistant à piloter le fonctionnement d'un équipement dynamique 1 en fonction de l'ensoleillement, ceci sur la base de mesures de courant de court-circuit Icc du générateur photovoltaïque 3.

La présente invention consiste, en fait, en un procédé pour le pilotage d'un équipement dynamique 1 (plus particulièrement d'un système dynamique 2 que comporte un tel équipement dynamique 1), ceci en fonction de l'ensoleillement.

Selon l'invention, ce procédé de pilotage consiste en ce que :
- on isole électriquement le générateur photovoltaïque 3 par rapport à la batterie 4 ;
- on relève la tension à vide Vo du générateur photovoltaïque 3 ;
- à partir de la tension à vide relevée Vo, on détermine une valeur numérique Vpv correspondant à cette tension à vide relevée Vo et on compare cette valeur numérique déterminée Vpv à au moins une valeur seuil de référence (Vseuil1 ; Vseuil2) ;
- lorsque cette valeur numérique déterminée Vpv correspond à une gamme de valeurs limitée par au moins une telle valeur seuil de référence (Vseuil1 ; Vseuil2), on pilote le système dynamique 2 pour lui conférer une configuration correspondant à cette gamme de valeurs.

Ainsi, le procédé consiste, en particulier, en ce qu'on isole électriquement le générateur photovoltaïque 3 par rapport à la batterie 4.

A ce propos, on observera qu'une telle isolation électrique du générateur photovoltaïque 3 est réalisée de manière temporaire, ceci au moins pendant la durée nécessaire pour permettre la mise en oeuvre du procédé de pilotage susmentionné alors que le reste du temps le générateur photovoltaïque 3 est raccordé à la batterie 4 pour son chargement.

En fait, on isole électriquement le générateur photovoltaïque 3 au moins pendant qu'on relève la tension à vide Vo de ce générateur photovoltaïque 3, voire encore pendant qu'on détermine une valeur numérique Vpv correspondant à cette tension à vide relevée Vo et/ou pendant qu'on compare cette valeur numérique déterminée Vpv à au moins une valeur seuil de référence (Vseuil1 ; Vseuil2).

Selon une autre caractéristique de ce procédé, on isole le générateur photovoltaïque, on relève la tension à vide Vo, on détermine la valeur numérique Vpv correspondant à cette tension à vide relevée Vo et on compare cette valeur numérique déterminée Vpv à au moins une valeur seuil de référence (Vseuill ; Vseuil2), ceci à intervalles déterminés et/ou réguliers.

En fait, un tel intervalle est choisi en fonction du besoin de l'application et/ou des composants électroniques intervenant pour la mise en oeuvre du procédé.

Dans le cas particulier d'un équipement dynamique 1 constitué par un volet roulant, cet intervalle est compris entre 30 secondes et 10 minutes, de préférence de l'ordre de 1 minute.

Une caractéristique additionnelle consiste en ce qu'on isole le générateur photovoltaïque, on relève la tension à vide Vo, on détermine la valeur numérique Vpv correspondant à cette tension à vide relevée Vo et on compare cette valeur numérique déterminée Vpv à au moins une valeur seuil de référence (Vseuil1 ; Vseuil2), ceci de manière successive et sous l'impulsion d'une commande de type séquentielle.

Tel que mentionné ci-dessus, le procédé consiste en ce qu'on détermine une valeur numérique Vpv correspondant à une tension à vide relevée Vo.

A ce propos, on observera que, selon un premier mode de réalisation, lorsqu'on détermine une telle valeur numérique Vpv, on convertit directement en valeur numérique une tension correspondant à la tension à vide relevée Vo.

Un autre mode de réalisation consiste en que, lorsqu'on détermine une telle valeur numérique Vpv, on convertit en valeur numérique une tension correspondant à une fraction (division) de cette tension à vide relevée Vo.

Ainsi, lorsqu'on détermine une telle valeur numérique Vpv, on divise tout d'abord la tension à vide relevée Vo pour l'obtention d'une fraction de cette tension à vide relevée Vo et on convertit ensuite cette fraction de cette tension à vide relevée Vo pour l'obtention de ladite valeur numérique Vpv correspondant à la tension à vide relevée Vo.

Un tel mode de réalisation permet, avantageusement, de ramener la tension à vide relevée Vo dans une plage admissible par un moyen (décrit ci-dessous) pour convertir un signal analogique en signal numérique.

Tel que mentionné ci-dessus, le procédé consiste en ce qu'on compare la valeur numérique déterminée Vpv à au moins une valeur seuil de référence (Vseuil1 ; Vseuil2).

Aussi et selon une caractéristique additionnelle, avant de procéder à une telle comparaison, on paramètre une telle valeur seuil de référence (Vseuil1 ; Vseuil2), voire on enregistre encore une telle valeur seuil de référence (Vseuil1 ; Vseuil2) dans une mémoire, notamment que comporte le dispositif de pilotage 5.

A ce propos, on observera qu'on paramètre une telle valeur seuil de référence (Vseuil1 ; Vseuil2) en fonction de valeurs relevées dans la littérature et/ou de valeurs déterminées expérimentalement (plus particulièrement par l'intermédiaire de sondes de température, de capteurs, notamment de capteurs d'irradiation) et/ou de valeurs déterminées par simulation numérique (plus particulièrement par l'intermédiaire de solveurs d'équations de type EES ou Scilab, de logiciels de calcul de type Matlab, de logiciels de simulation dynamique de type TRNSYS, Ecotect, Energy Plus ou analogue) et/ou de valeurs déterminées par calcul (plus particulièrement par l'intermédiaire d'équations, d'abaques ou autres).

Une autre caractéristique du procédé selon l'invention consiste en ce que, lorsqu'on relève la tension à vide Vo du générateur photovoltaïque 3, on relève également la température du dispositif de pilotage 5 et, soit on pilote le système dynamique 2 lorsque cette température est supérieure à une température seuil Ts, soit on inhibe le pilotage de ce système dynamique 2 lorsque cette température est inférieure à cette température seuil Ts.

On observera que cette température seuil Ts a été déterminée préalablement de façon expérimentale, validée par simulation pour l'application choisie, et pourra être ajustée en fonction du besoin. Un mode particulier de réalisation consiste en ce que la température seuil Ts est comprise entre 0 et 10°C, plus particulièrement de l'ordre de 5°C.

Une caractéristique additionnelle du procédé consiste en ce qu'on inhibe le pilotage du système dynamique 2 à l'intérieur d'au moins une plage horaire prédéfinie.

En fait et de manière plus précise, à l'intérieur de cette plage horaire prédéfinie, on inhibe un tel pilotage en empêchant la comparaison entre la valeur numérique déterminée Vpv et au moins une valeur seuil de référence (Vseuil1 ; Vseuil2), plus particulièrement en inhibant la fonction comparateur de l'équipement dynamique 1.

A l'intérieur de cette plage horaire, on peut, encore, empêcher le relevé de la tension à vide Vo et/ou la détermination de la valeur numérique Vpv correspondant à cette tension à vide relevée Vo.

A ce propos, on observera que la plage horaire prédéfinie durant laquelle on inhibe le pilotage du système dynamique peut, par exemple, s'étendre entre 22h30 et 7h.

De plus, une telle plage horaire peut être modulée en fonction du jour de la semaine et/ou de la saison et/ou de la localisation géographique et/ou de l'orientation géographique du système dynamique 2 et/ou de l'équipement dynamique 1.

Un tel mode de réalisation permet, avantageusement, d'éviter un pilotage du système dynamique 2 à une heure trop matinale ou trop tardive.

Tel que mentionné ci-dessus, le procédé de pilotage consiste en ce que, lorsque la valeur numérique déterminée Vpv correspond à une gamme de valeurs limitée par au moins une valeur seuil de référence (Vseuil1 ; Vseuil2), on pilote le système dynamique 2 pour lui conférer une configuration correspondant à cette gamme de valeurs.

Ainsi et selon un mode particulier de réalisation de l'invention, ce procédé de pilotage peut consister en ce que, lorsque la valeur numérique déterminée Vpv est inférieure à une valeur seuil de référence vseuil1, on pilote le système dynamique 2 pour lui conférer une première configuration.

Dans le cas particulier d'un équipement dynamique 1 constitué par un volet roulant, cette première configuration peut être constituée par une position de fermeture complète du tablier de ce volet roulant.

Ce procédé peut, alors, également, consister en ce que, lorsque la valeur numérique déterminée Vpv est supérieure à une valeur seuil de référence vseuil2 (selon un mode particulier de réalisation, Vseuil2 peut être égal à Vseuil1), on pilote le système dynamique 2 pour lui conférer une deuxième configuration.

Dans le cas particulier d'un équipement dynamique 1 constitué par un volet roulant, cette deuxième configuration peut être constituée par une position d'ouverture complète du tablier de ce volet roulant.

Ainsi, ce mode particulier de réalisation de l'invention permet d'assurer un pilotage crépusculaire (fermeture/ouverture crépusculaire) d'un tablier de volet roulant.

Bien entendu et tel que mentionné ci-dessus, un tel pilotage peut, selon un mode de réalisation plus évolué, être assuré en prenant encore en compte une plage horaire prédéfinie et/ou une deuxième valeur seuil de référence Vseuil2.

Ce procédé de pilotage peut, alors encore, consister en ce que, lorsque le valeur numérique déterminée Vpv est inférieure à une première valeur seuil de référence Vseuill, on pilote le système dynamique 2 pour lui conférer une première configuration (par exemple une position de fermeture crépusculaire), ceci lorsque la valeur numérique déterminée Vpv est inférieure à une deuxième valeur seuil de référence Vseuil2 ou lorsque l'heure courante relevée correspond à une heure prédéterminée pour laquelle le système dynamique 2 adopte cette première configuration.

Ce procédé de pilotage peut, également, consister en ce que, avant de comparer la valeur numérique déterminée Vpv à au moins une valeur seuil de référence (Vseuil1 ; Vseuil2), on teste si l'heure courante H est située dans la plage horaire prédéfinie (notamment 22h30 à 7h) pour, soit empêcher une telle comparaison lorsque c'est le cas, soit autoriser une telle comparaison lorsque ce n'est pas la cas.

Tel que mentionné ci-dessus, le procédé selon l'invention consiste à piloter l'équipement dynamique 1 (plus particulièrement le système dynamique 2) en fonction de la tension à vide Vo du générateur photovoltaïque 3.

En fait, l'invention concerne, également, un équipement dynamique 1, notamment conçu pour la mise en oeuvre de ce procédé.

Tel que mentionné ci-dessus, un tel équipement dynamique 1 comporte un système dynamique 2, un générateur photovoltaïque 3, une batterie 4 et un dispositif 5 pour piloter l'équipement dynamique 1 en fonction de l'ensoleillement.

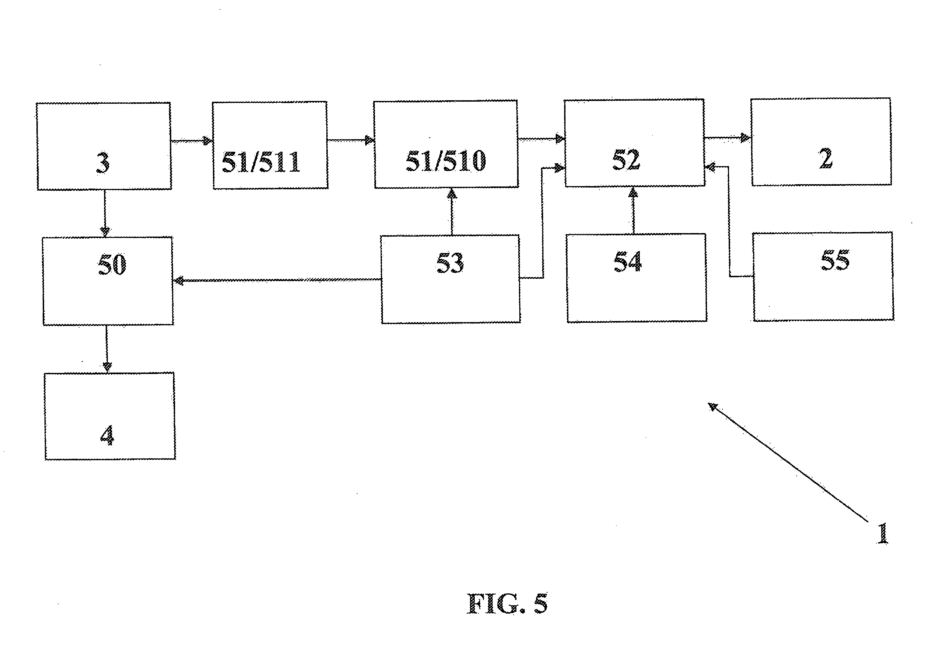

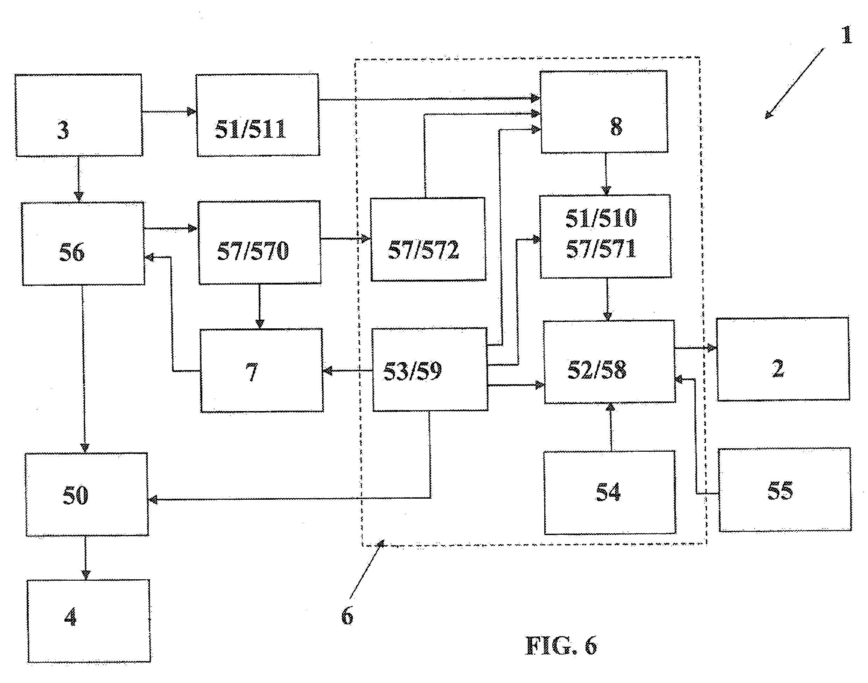

Selon l'invention et tel que visible figures 5 et 6, ce dispositif 5 pour piloter un tel équipement dynamique 1 comporte :
- un moyen 50 pour isoler électriquement le générateur photovoltaïque 3 par rapport à la batterie ;
- un moyen pour relever la tension à vide Vo du générateur photovoltaïque 3 ;
- un moyen 51 pour déterminer une valeur numérique Vpv correspondant à cette tension à vide relevée Vo ;
- un moyen 52 pour comparer cette valeur numérique déterminée Vpv à au moins une valeur seuil de référence (Vseuill ; Vseuil2);
- un moyen 53 pour commander au moins le moyen 50 pour isoler électriquement, le moyen pour 51 déterminer une valeur numérique Vpv ainsi que le moyen 52 pour comparer ;
- un moyen pour piloter le système dynamique en fonction du résultat de la comparaison entre cette valeur numérique déterminée Vpv et au moins une telle valeur seuil de référence (Vseuil1 ; Vseuil2).

En ce qui concerne le moyen 50 pour isoler électriquement la générateur photovoltaïque 3, celui-ci peut, selon un premier mode de réalisation, être au moins en partie constitué par un relais électromécanique, interposé entre le générateur photovoltaïque 3 et la batterie 4, et comportant un contact repos ainsi qu'une bobine, plus particulièrement alimentée par la batterie 4.

Cependant et selon un deuxième mode de réalisation, le moyen 50 pour isoler électriquement le générateur photovoltaïque 3 est au moins en partie constitué par une diode à très faible courant de fuite interposée entre le générateur photovoltaïque 3 et la batterie 4.

Dans un pareil cas, ladite diode présente une tension de seuil déterminée de sorte que le moyen 50 pour isoler électriquement le générateur photovoltaïque 3 assure une isolation de celui-ci 3 tant que la tension aux bornes de ce générateur photovoltaïque 3 est inférieure à la tension de la batterie 4 augmentée de la tension de seuil de la diode.

Ainsi, tant que la tension aux bornes du générateur photovoltaïque 3 est inférieure à celle de la batterie 4 augmentée de la tension de seuil de la diode, le générateur photovoltaïque 3 se comporte comme si il était à vide. Ce mode de réalisation permet, de manière avantageuse, d'éviter une déconnexion physique du générateur photovoltaïque 3.

Tel que mentionné ci-dessus, le dispositif de pilotage 5 comporte un moyen 51 pour déterminer une valeur numérique Vpv correspondant à la tension à vide Vo relevée.

Ce moyen 51 pour déterminer une telle valeur numérique Vpv comporte au moins un moyen 510 pour convertir un signal analogique, correspondant à la tension à vide Vo relevée, en un signal numérique correspondant à cette tension à vide Vo relevée.

En fait, un tel moyen pour convertir un tel signal est, plus particulièrement, constitué par un convertisseur analogique-numérique, notamment de type autonome 8 bits (ou plus).

De manière additionnelle, le moyen 51 pour déterminer une valeur numérique Vpv comporte, encore, un diviseur de tension 511, interposé entre le générateur photovoltaïque 3 et le moyen 510 pour convertir un signal analogique en un signal numérique.

Un tel diviseur de tension 511 est conçu pour diviser la tension à vide Vo relevée du générateur photovoltaïque 3, ceci pour l'obtention d'une tension Vo', correspondant à la tension à vide Vo du générateur photovoltaïque, et dont la valeur est comprise dans une gamme de valeurs admissible pour le moyen 510 pour convertir un signal analogique en un signal numérique.

Selon un mode de réalisation particulier de l'invention, ce diviseur de tension 511 est constitué par un pont de résistances dont le rapport est égal à la tension d'entrée maximale du moyen 510 pour convertir divisée par la tension à vide du générateur photovoltaïque 3 maximale.

De manière additionnelle, ce diviseur de tension 511 est conçu pour que le courant de polarisation du pont de résistance ne dépasse pas quelques dizaines de micro-ampères en sorte que la charge qu'il amène en sortie du générateur photovoltaïque 3 puisse être considérée comme négligeable.

Tel que mentionné ci-dessus, le dispositif de pilotage 5 comporte un moyen 53 pour commander au moins le moyen 50 pour isoler électriquement, le moyen pour 51 déterminer une valeur numérique Vpv ainsi que le moyen 52 pour comparer.

En fait, ce moyen 53 pour commander est conçu pour commander, à intervalles déterminés et/ou réguliers, le moyen 50 pour isoler électriquement, le moyen 51 pour déterminer une valeur numérique Vpv et le moyen 52 pour comparer, voire encore le moyen pour relever et/ou le moyen pour piloter.

A ce propos, on observera que, dans le cas particulier d'un volet roulant, ce moyen 53 pour commander peut être conçu pour assurer une telle commande à intervalles déterminés et réguliers compris entre 30 secondes et 10 minutes, de préférence de l'ordre de 1 minute.

De manière additionnelle, ce moyen 53 de commande peut, encore, être conçu pour commander, de manière successive, le moyen 50 pour isoler électriquement, le moyen 51 pour déterminer une valeur numérique et le moyen 52 pour comparer.

Selon un mode de réalisation préféré de l'invention, un tel moyen 53 de commande est constitué par un séquenceur de mesure conçu pour cadencer les opérations nécessaires au pilotage du système dynamique 2 à savoir isoler le générateur photovoltaïque 3, puis déclencher la conversion analogique-numérique, effectuer ensuite la comparaison et finalement reconnecter le générateur photovoltaïque 3.

Selon un caractéristique additionnelle, le dispositif de pilotage 5 comporte, encore, au moins un moyen 54 pour paramétrer au moins une valeur seuil de référence (Vseuill ; Vseuil2).

Un tel moyen 54 pour paramétrer peut être constitué, soit par un potentiomètre ajustable ou analogue, soit par une mémoire incorporant au moins une valeur seuil de référence paramétrable (Vseuil1 ; Vseuil2). Une telle mémoire est de type non volatile et peut être interne ou externe.

Encore une autre caractéristique additionnelle consiste en ce que ce dispositif comporte un moyen pour relever la température du dispositif 5 pour piloter l'équipement dynamique 1, plus particulièrement le système dynamique 2. En fait, un tel moyen pour relever la température est, plus particulièrement, conçu pour relever la température d'une carte électronique que comporte ce dispositif de pilotage 5.

Selon une autre caractéristique, le dispositif de pilotage 5 comporte, également, un moyen 55 pour inhiber le pilotage du système dynamique 2 à l'intérieur d'au moins une plage horaire prédéfinie.

En fait, ce moyen 55 pour inhiber le pilotage du système dynamique 2 est, de préférence, conçu pour empêcher la comparaison entre la valeur numérique déterminée Vpv et au moins une valeur seuil de référence (Vseuil1 ; Vseuil2), plus particulièrement en inhibant le moyen 52 pour comparer que comporte le dispositif de pilotage 5.

De manière additionnelle, ce moyen 55 pour inhiber le pilotage peut, encore, être conçu pour inhiber le moyen pour relever la tension à vide Vo et/ou le moyen 51 pour déterminer une valeur numérique Vpv.

A ce propos, on observera que la plage horaire prédéfinie durant laquelle on inhibe le pilotage du système dynamique 2 peut, par exemple, s'étendre entre 22h30 et 7h.

De plus, une telle plage horaire peut être modulée en fonction du jour de la semaine et/ou de la saison et/ou de la localisation géographique et/ou de l'orientation géographique du système dynamique 2 et/ou de l'équipement dynamique 1.

Un tel mode de réalisation permet, avantageusement, d'éviter un pilotage du système dynamique 2 à une heure trop matinale ou trop tardive.

Selon un mode de réalisation préféré de l'invention, le moyen 55 pour inhiber est au moins en partie constitué par une horloge temps réel avec calendrier.

Encore une autre caractéristique consiste en ce que le dispositif de pilotage 5 comporte un microcontrôleur 6 intégrant au moins une partie du moyen 51 pour déterminer une valeur numérique Vpv correspondant à la tension à vide Vo (plus particulièrement le convertisseur analogique-numérique 510) et/ou le moyen 52 pour comparer cette valeur numérique déterminée Vpv à au moins une valeur seuil de référence (Vseuil1 ; Vseuil2), voire et selon le cas, le moyen 53 pour commander et/ou la mémoire 54 incorporant au moins une valeur seuil de référence paramétrable (Vseuil1 ; Vseuil2).

A ce propos, on observera que le moyen 52 pour comparer que comporte ce microcontrôleur 6 est, plus particulièrement, constitué par une routine logicielle.

On observera qu'un tel microcontrôleur 6 possède des circuits d'horloge (timers) pouvant, avantageusement, être utilisés pour implémenter la fonction de séquenceur de mesure et constituant, au moins en partie, ledit moyen 53 de commande.

Tel que mentionné ci-dessus, la présente invention consiste à piloter l'équipement dynamique 1 (plus particulièrement au moins le système dynamique 2 que comporte cet équipement dynamique 1) en fonction de l'ensoleillement, ceci sur la base d'au moins un relevé de la tension à vide Vo du générateur photovoltaïque 3.

De manière additionnelle, le procédé selon l'invention consiste, encore, à piloter cet équipement dynamique 1 en fonction du courant de court-circuit Icc du générateur photovoltaïque 3. Ce procédé consiste, alors, en ce que :
- on isole électriquement le générateur photovoltaïque 3 par rapport à la batterie 4;
- on relève le courant de court-circuit Icc du générateur photovoltaïque 3 isolé ;
- à partir d'au moins un relevé de courant de court-circuit Icc, on détermine une valeur numérique Ipv correspondant à ce ou ces relevés de courant de court-circuit Icc et on compare cette valeur numérique déterminée Ipv à au moins une valeur seuil de référence (Iseuil1 : lseuil2);
- lorsque cette valeur numérique déterminée Ipv correspond à une gamme de valeurs limitée par au moins une telle valeur seuil de référence (Iseuil1 ; Iseuil2), on pilote le système dynamique 2 pour lui conférer une configuration correspondant à cette gamme de valeurs.

En fait, ce procédé consiste, plus particulièrement, en ce que, avant de piloter le système dynamique 2 :
- on isole électriquement le générateur photovoltaïque 3 par rapport à la batterie 4;
- on relève le courant de court-circuit Icc du générateur photovoltaïque 3 isolé ;
- à partir d'au moins un relevé de courant de court-circuit Icc, on détermine une valeur numérique Ipv correspondant à ce ou ces relevés de courant de court-circuit Icc ;
- et, lorsqu'on pilote le système dynamique 2, on pilote ce système dynamique 2 pour lui conférer une configuration déterminée en fonction d'au moins une des valeurs numériques déterminées Vpv et/ou Vpv et Ipv.

Ce procédé consiste, alors, plus particulièrement, en ce que :
- on isole électriquement le générateur photovoltaïque 3 par rapport à la batterie 4, on relève la tension à vide Vo du générateur photovoltaïque 3, à partir de la tension à vide relevée Vo on détermine une valeur numérique Vpv correspondant à cette tension à vide relevée Vo, et on compare cette valeur numérique déterminée Vpv à au moins une valeur seuil de référence (Vseuil1 ; Vseuil2) ;
- on isole électriquement le générateur photovoltaïque 3 par rapport à la batterie 4, on relève le courant de court-circuit Icc du générateur photovoltaïque 3 isolé, à partir d'au moins un relevé de courant de court-circuit Icc on détermine une valeur numérique Ipv correspondant à ce ou ces relevés de courant de court-circuit Icc, et on compare cette valeur numérique déterminée Ipv à au moins une valeur seuil de référence (Iseuil1 ; Iseuil2);
- lorsque cette valeur numérique déterminée Vpv correspond à une gamme Gv de valeurs limitée par au moins une telle valeur seuil de référence (Vseuil1 ; Vseuil2) et lorsque cette valeur numérique déterminée Ipv correspond à une gamme Gi de valeurs limitée par au moins une telle valeur seuil de référence (Iseuil1 ; Iseuil2), on pilote le système dynamique 2 pour lui conférer une configuration correspondant à ces gammes (Gv ; Gi) de valeurs.

A ce propos, on observera que, selon un mode de réalisation préféré de l'invention, on relève la tension à vide Vo du générateur photovoltaïque 3 (voire on détermine une valeur numérique Vpv correspondant à cette tension à vide relevée Vo, et on compare cette valeur numérique déterminée Vpv à au moins une valeur seuil de référence (Vseuil1 ; Vseuil2)), et on relève le courant de court-circuit Icc du générateur photovoltaïque 3 isolé (voire on détermine une valeur numérique Ipv correspondant à ce ou ces relevés de courant de court-circuit Icc, et on compare cette valeur numérique déterminée Ipv à au moins une valeur seuil de référence (Iseuil1 ; Iseuil2)), ceci de manière séquentielle.

Aussi et selon un mode de réalisation préféré, tout d'abord, on relève la tension à vide Vo du générateur photovoltaïque 3 (voire on détermine une valeur numérique Vpv correspondant à cette tension à vide relevée Vo, et on compare cette valeur numérique déterminée Vpv à au moins une valeur seuil de référence (Vseuil1 ; Vseuil2)), et, ensuite, on relève le courant de court-circuit Icc du générateur photovoltaïque 3 isolé (voire on détermine une valeur numérique Ipv correspondant à ce ou ces relevés de courant de court-circuit Icc, et on compare cette valeur numérique déterminée Ipv à au moins une valeur seuil de référence (Iseuil1 ; Iseuil2)).

De plus et tel que mentionné ci-dessus, on pilote le système dynamique 2 pour lui conférer une configuration correspondant aux gammes (Gv ; Gi) de valeurs.

A ce propos, on observera qu'un tel pilotage est, de préférence, assuré en pilotant le système dynamique 2 pour lui conférer une configuration correspondant à la combinaison de ces deux gammes (Gv ; Gi) de valeurs, l'une Gv correspondant à une gamme Gv de valeurs limitée par au moins une valeur seuil de référence (Vseuil1 ; Vseuil2) tandis que l'autre Gi correspond à une gamme Gi de valeurs limitée par au moins une valeur seuil de référence (Iseuil1 ; Iseuil2).

De plus, on observera que le pilotage d'un tel système dynamique 2 peut être assuré en fonction, d'une part, d'une pluralité de gammes Gv de valeurs limitées, chacune, par au moins une valeur seuil de référence (Vseuil1 ; Vseuil2) et, d'autre part, d'une pluralité de gammes Gi de valeurs limitées, chacune, par au moins une valeur seuil de référence (Iseuill ; Iseuil2).

Le procédé consiste, alors, à définir une configuration particulière du système dynamique 2 pour chaque combinaison de deux de ces gammes (Gv ; Gi) et à piloter, alors, ce système dynamique 2 pour lui conférer une configuration correspondant à une telle combinaison.

Selon un mode préféré de réalisation, ce procédé consiste en ce que :
- on procède, de manière espacée dans le temps, à plusieurs relevés de courant de court-circuit Icc aux bornes du générateur photovoltaïque 3 isolé ;
- pour chaque relevé de courant de court-circuit Icc on détermine une valeur numérique intermédiaire Ipv' correspondant à un tel relevé de courant de court-circuit Icc ;
- on détermine une valeur numérique Ipv en calculant la moyenne des valeurs numériques intermédiaires Ipv' correspondant à une pluralité de ces relevés de courant de court-circuit Icc ;
- on compare cette valeur numérique déterminée Ipv à au moins une valeur seuil de référence (Iseuil1 ; Iseuil2);
- on pilote le système dynamique 2 en fonction du résultat de cette comparaison.

A ce propos, on observera qu'on procède à un relevé de courant de court-circuit Icc aux bornes du générateur photovoltaïque 3 isolé de manière régulièrement espacée dans le temps, ceci avec un intervalle entre deux relevés compris entre 2 et 15 minutes, de préférence de l'ordre de 5 minutes.

De plus, lorsqu'on détermine une valeur numérique Ipv, on calcule la moyenne des valeurs numériques intermédiaires Ipv' correspondant à un nombre N déterminé de relevés de courant de court-circuit Icc choisis parmi les derniers relevés de courant de court-circuit réalisés Icc.

Un tel mode de réalisation permet, ainsi, de réaliser une moyenne glissante sur les derniers relevés de courant de court-circuit Icc effectués.

Un mode préféré de réalisation consiste en ce que N varie de 2 à 10 et est, de préférence, égal à 5.

Selon une caractéristique de ce procédé, on isole le générateur photovoltaïque 3, on relève le courant de court-circuit Icc, on détermine la valeur numérique Ipv correspondant à au moins un relevé de courant de court-circuit Icc et on compare cette valeur numérique déterminée Ipv à au moins une valeur seuil de référence (Iseuil1 ; Iseuil2), ceci à intervalles déterminés et/ou réguliers.

En fait, un tel intervalle est choisi en fonction du besoin de l'application et/ou des composants électroniques intervenant pour la mise en oeuvre du procédé.

Un mode préféré de réalisation consiste en ce que cet intervalle régulier est compris entre 2 et 15 minutes, de préférence de l'ordre de 5 minutes.

On observera qu'un tel intervalle est suffisamment précis pour détecter un changement météorologique.

Ainsi, d'une part, en mettant en oeuvre ce procédé à intervalle régulier (par exemple 5 minutes) et, d'autre part, en déterminant une valeur numérique Ipv en calculant la moyenne des valeurs numériques intermédiaires Ipv' correspondant à un nombre N déterminé de relevés de courant de court-circuit Icc (par exemple N=5), on pilote le système dynamique 2 de manière suffisamment précise pour détecter un changement météorologique et tout en lissant les passages nuageux.

Tel que mentionné ci-dessus, l'équipement dynamique 1 comporte un générateur photovoltaïque 3 ainsi qu'une batterie 4, alimentée par ce générateur photovoltaïque 3, et alimentant en énergie électrique le système dynamique 2. A ce propos, on observera que la quantité d'énergie stockée dans cette batterie 4 peut être insuffisante pour actionner ce système dynamique 2, en particulier en cas de ressource solaire insuffisante pendante un durée prolongée. Afin de palier cet inconvénient, l'équipement dynamique 1 est conçu pour permettre l'alimentation du système dynamique 2 par une source de tension externe (par exemple une alimentation secteur ou une batterie de secours).

Aussi, au moment de mettre en oeuvre le procédé de pilotage conforme à l'invention, le courant de court circuit Icc peut atteindre une valeur destructive pour le moyen 56 pour isoler électriquement le générateur photovoltaïque 3 et/ou pour une partie au moins du moyen 57 pour déterminer une valeur numérique Ipv correspondant à au moins un relevé de courant de court circuit Icc (plus particulièrement le convertisseur courant-tension 570).

Aussi et selon une caractéristique additionnelle de l'invention, avant d'isoler électriquement le générateur photovoltaïque 3, on assure la protection de ce moyen 56 pour isoler électriquement le générateur photovoltaïque 3 et/ou de cette partie au moins du moyen 57 pour déterminer une valeur numérique Ipv correspondant à au moins un relevé de courant de court circuit Icc, ceci lorsque le courant de court circuit Icc est supérieur à une valeur de consigne définie.

Selon un mode de réalisation préféré cette valeur de consigne est définie pour être, d'une part, supérieure au courant maximum délivrable par le générateur photovoltaïque 3 et, d'autre part, inférieure au courant destructif du moyen 56 pour isoler électriquement le générateur photovoltaïque 3 et/ou d'une partie au moins du moyen 57 pour déterminer une valeur numérique Ipv.

En fait, lorsque le moyen 56 pour isoler le générateur photovoltaïque 3 est au moins en partie constitué par un relais électromécanique, on assure une telle protection en limitant le courant de court circuit Icc (notamment en écrêtant ce courant de court-circuit Icc) et en interrompant, ensuite, (au moins pendant une durée donnée, notamment quelques minutes) la commande, par le moyen de commande 59, de ce moyen 56 pour isoler le générateur photovoltaïque 3.

Cependant, lorsque ce moyen 56 pour isoler comporte une diode à très faible courant de fuite ainsi qu'un transistor de commutation, on assure une telle protection en limitant la conduction de ce moyen 56 pour isoler (plus particulièrement pour limiter la conduction du transistor que comporte ce moyen 56).

Le procédé consiste, également, en ce qu'on détermine une valeur numérique Ipv ou une valeur numérique intermédiaire Ipv'.

Aussi, lorsqu'on détermine une telle valeur numérique Ipv, respectivement une telle valeur numérique intermédiaire Ipv', correspondant à un relevé de courant de court-circuit Icc, on convertit tout d'abord le courant de court-circuit relevé Icc en une tension Vcc et on convertit, ensuite et en une valeur numérique Ipv, respectivement en une valeur numérique intermédiaire Ipv', correspondant à cette tension Vcc et à ce courant de court-circuit relevé Icc, cette tension Vcc ou une amplification de cette tension Vcc.

Selon une autre caractéristique, avant de comparer la valeur numérique déterminée Ipv à au moins une valeur seuil de référence (Iseuil1 ; Iseuil2), on paramètre une telle valeur seuil de référence (Iseuill ; Iseuil2).

De manière similaire à ce qui a été décrit ci-dessus, on paramètre une telle valeur seuil de référence (Iseuil1 ; Iseuil2), soit en réglant un potentiomètre ajustable, soit en enregistrant une telle valeur seuil de référence (Iseuil1 ; Iseuil2) dans une mémoire.

Là encore, on paramètre une valeur seuil de référence (Iseuil1 ; Iseuil2) en fonction de valeurs relevées dans la littérature et/ou de valeurs déterminées expérimentalement et/ou de valeurs déterminées par simulation numérique et/ou de valeurs déterminées par calcul.

Une caractéristique additionnelle consiste en ce que, lorsqu'on relève le courant de court-circuit Icc du générateur photovoltaïque 3 isolé, on relève également la température T du dispositif de pilotage 5 et, soit on autorise le pilotage du système dynamique 2 lorsque cette température T est supérieure à une température seuil Ts, soit on inhibe le pilotage de ce système dynamique 2 lorsque cette température T est inférieure à cette température seuil Ts.

Le procédé décrit ci-dessus permet, en fait, de piloter l'équipement dynamique 1 (plus particulièrement au moins le système dynamique 2) en fonction de l'ensoleillement.

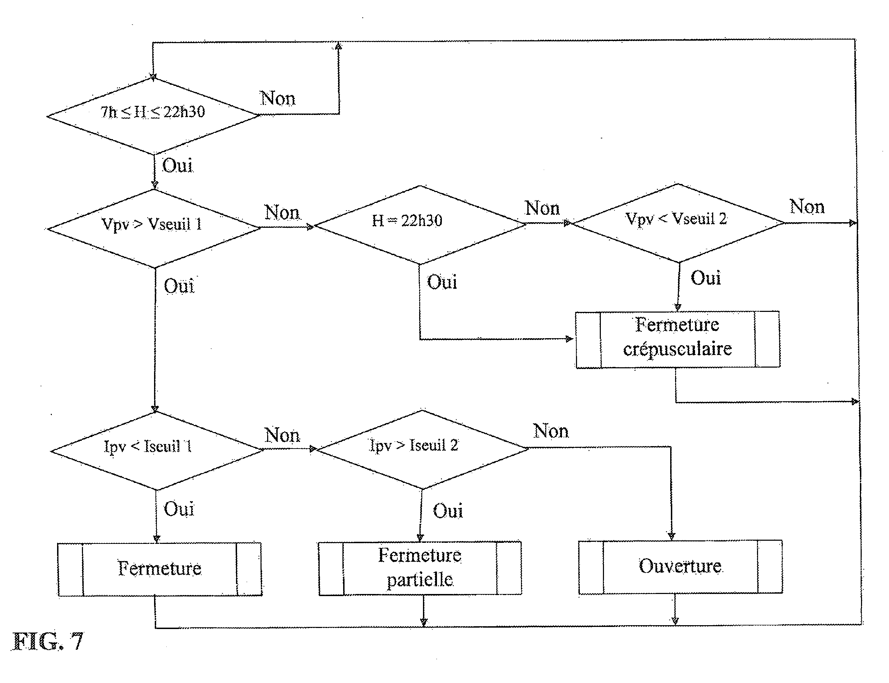

Selon un mode particulier de réalisation, on procède à un tel pilotage conformément au logigramme illustré figure 7.

En particulier, ce procédé consiste en ce que, lorsque la valeur numérique déterminée Vpv (correspondant à la tension à vide relevée Vo du générateur photovoltaïque 3) est inférieure à une première valeur seuil de référence Vseuil1, on pilote le système dynamique 2 pour lui conférer une première configuration, ceci lorsque la valeur numérique déterminée Vpv est inférieure à une deuxième valeur seuil de référence Vseuil2 ou lorsque l'heure courante relevée H correspond à une heure prédéterminée pour laquelle le système dynamique adopte cette première configuration.

Tel que mentionné ci-dessus, dans le cas particulier d'un équipement dynamique 1 constitué par un volet roulant, cette première configuration peut être constituée par une position de fermeture crépusculaire du tablier de ce volet roulant.

Ce procédé consiste, également, en ce que, lorsque la valeur numérique déterminée Vpv (correspondant à la tension à vide relevée Vo du générateur photovoltaïque 3) est supérieure à une valeur seuil de référence Vseuil1 :
- on compare, à au moins une valeur seuil de référence (Iseuil1 ; Iseuil2), une valeur numérique Ipv déterminée à partir d'au moins un relevé du courant de court-circuit Icc du générateur photovoltaïque 3 isolé électriquement de la batterie 4 et correspondant à au moins un tel relevé de courant de court-circuit Icc ;
- on pilote le système dynamique 2 pour lui conférer une configuration prédéfinie et fonction du résultat de cette comparaison.

Ainsi, lorsque la valeur numérique déterminée Ipv est inférieure à une première valeur seuil de référence Iseuil1, on pilote le système dynamique 2 pour lui conférer une deuxième configuration.

A ce propos, on observera que, lorsque le procédé consiste, encore, à relever la température T du dispositif 5 de pilotage, on pilote ce système dynamique 2 pour lui conférer une deuxième configuration, ceci lorsque la valeur numérique déterminée Ipv est inférieure à une première valeur seuil de référence Iseuill et que la température T du dispositif 5 de pilotage est inférieure à une température de seuil Tseuil1.

Dans le cas particulier d'un équipement dynamique 1 constitué par un volet roulant, cette deuxième configuration peut être constituée par une position de fermeture complète du tablier de ce volet roulant.

Cependant, lorsque la valeur numérique déterminée Ipv est supérieure à une première valeur seuil de référence Iseuil1 :
- soit on pilote le système dynamique pour lui conférer une troisième configuration lorsque la valeur numérique déterminée Ipv est supérieure à une deuxième valeur seuil de référence Iseuil2 ;
- soit on pilote le système dynamique pour lui conférer une quatrième configuration lorsque la valeur numérique déterminée Ipv est inférieure à la deuxième valeur seuil de référence Iseuil2.

A ce propos, on observera que, lorsque le procédé consiste, encore, à relever la température T du dispositif 5 de pilotage, ce procédé consiste, alors et lorsque la valeur numérique déterminée Ipv est supérieure à une première valeur seuil de référence Iseuil1, en ce que :
- soit on pilote le système dynamique pour lui conférer une troisième configuration lorsque la valeur numérique déterminée Ipv est supérieure à une deuxième valeur seuil de référence Iseuil2 et que la température T du dispositif 5 de pilotage est supérieure à une température de seuil Tseuil2 ;
- soit on pilote le système dynamique pour lui conférer une quatrième configuration lorsque la valeur numérique déterminée Ipv est inférieure à la deuxième valeur seuil de référence Iseuil2 ou lorsque la température T du dispositif 5 de pilotage est inférieure à une température de seuil Tseuil2.

Dans le cas particulier d'un équipement dynamique 1 constitué par un volet roulant, cette troisième configuration peut être constituée par une position de fermeture partielle (fermeture sur ajours) du tablier de ce volet roulant tandis que cette quatrième configuration peut être constituée par une ouverture complète de ce tablier.

Là encore, ce procédé de pilotage peut, également, consister en ce que, avant de comparer la valeur numérique déterminée Vpv à au moins une valeur seuil de référence (Vseuil1 ; Vseuil2), on teste si l'heure courante H est située dans la plage horaire prédéfinie (notamment 22h30 à 7h) pour, soit empêcher une telle comparaison lorsque c'est le cas, soit autoriser une telle comparaison lorsque ce n'est pas le cas.

En fait, l'invention concerne, également, un équipement dynamique 1 comportant, d'une part, des moyens (50 à 55) décrits ci-dessus, notamment conçus pour la mise en oeuvre du procédé susmentionné basé sur des relevés de tension à vide Vo et, d'autre part, des moyens additionnels, décrits ci-dessous, et notamment conçus pour la mise en oeuvre des étapes additionnelles du procédé de pilotage basées sur des relevés de courant de court-circuit Icc.

Selon l'invention et tel que visible figure 6, cet équipement dynamique 1 comporte ledit dispositif 5 pour piloter cet équipement dynamique 1 lequel 5 comporte alors encore :
- un moyen 56 pour isoler électriquement le générateur photovoltaïque 3 par rapport à la batterie 4;
- un moyen pour relever le courant de court-circuit Icc du générateur photovoltaïque 3 ;
- un moyen 57 pour déterminer une valeur numérique Ipv correspondant à au moins un relevé de courant de court-circuit Icc;
- un moyen 58 pour comparer cette valeur numérique déterminée Ipv à au moins une valeur seuil de référence (Iseuil1 ; Iseuil2);
- un moyen 59 pour commander au moins ledit moyen 56 pour isoler électriquement, ledit moyen 57 pour déterminer une valeur numérique Ipv ainsi que ledit moyen 58 pour comparer ;
- un moyen pour piloter le système dynamique 2 en fonction du résultat de la comparaison entre cette valeur numérique déterminée Ipv et au moins une telle valeur seuil de référence (Iseuil1 ; Iseuil2).

Ainsi, le dispositif de pilotage 5 comporte un moyen 56 pour isoler électriquement le générateur photovoltaïque 3.

Selon un premier mode de réalisation, ce moyen 56 pour isoler électriquement le générateur photovoltaïque 3 est au moins en partie constitué par un commutateur qui est, de préférence, constitué par un relais électromécanique, interposé entre le générateur photovoltaïque 3 et la batterie 4, et comportant un contact repos ainsi qu'une bobine alimentée par la batterie 4 (ou toute autre source d'énergie).

Cependant et selon un mode préféré de réalisation de l'invention, le moyen 56 pour isoler électriquement le générateur photovoltaïque 3 comporte, d'une part, une diode à très faible courant de fuite interposée entre le générateur photovoltaïque 3 et la batterie 4 et, d'autre part, un transistor de commutation (de type MOSFET de puissance) implanté en amont de ladite diode.

Dans un tel mode de réalisation, lorsque le transistor est conducteur, la diode est polarisée en inverse et n'est, donc, plus conductrice. La déconnexion physique de la batterie 4 n'est alors plus nécessaire.

Ce dispositif de pilotage 5 comporte, également, un moyen 57 pour déterminer une valeur numérique Ipv correspondant à au moins un relevé de courant de court-circuit Icc.

Ce moyen 57 pour déterminer une telle valeur numérique Ipv comporte, d'une part, au moins un moyen 570 pour convertir le courant de court-circuit relevé Icc en une tension Vcc et, d'autre part, au moins un moyen 571 pour convertir le signal analogique d'une telle tension Vcc (notamment la tension Vcc convertie par le moyen 570 pour convertir) en une valeur numérique Ipv correspondant à cette tension Vcc.

On observera que le moyen 571 pour convertir le signal analogique de la tension Vcc en une valeur numérique Ipv correspondant à cette tension Vcc est constitué par convertisseur analogique-numérique.

De plus, le moyen 57 pour déterminer une valeur numérique Ipv correspondant à une pluralité de relevés de courant de court-circuit Icc comporte, d'une part, au moins un moyen 570 pour convertir chaque courant de court-circuit Icc relevé en une tension Vcc et, d'autre part, au moins un moyen 571 (plus particulièrement un convertisseur analogique-numérique) pour convertir le signal analogique d'une telle tension Vcc (notamment la tension Vcc convertie par le moyen 570 pour convertir) en une valeur numérique intermédiaire Ipv' correspondant à cette tension Vcc et, d'autre part encore, un moyen pour calculer la moyenne des valeurs numériques intermédiaires Ipv' pour l'obtention de la valeur numérique Ipv correspondant à la pluralité de relevés de courant de court-circuit Icc.

Encore une autre caractéristique consiste en ce que le moyen 57 pour déterminer une valeur numérique Ipv, respectivement une valeur numérique intermédiaire Ipv', comporte, encore, un amplificateur 572 interposé entre le moyen 570 pour convertir un courant de court-circuit Icc relevé en une tension Vcc et le moyen 571 pour convertir le signal analogique d'une telle tension Vcc en une valeur numérique Ipv, respectivement en une valeur numérique intermédiaire Ipv'.

Le dispositif de pilotage 5 comporte, encore, au moins un moyen pour paramétrer au moins une valeur seuil de référence (Iseuill ; Iseuil2).

Un tel moyen pour paramétrer peut, là encore, être constitué, soit par un potentiomètre ajustable ou analogue, soit par une mémoire incorporant au moins une valeur seuil de référence paramétrable (Iseuil1 ; Iseuil2). Une telle mémoire est de type non volatile et peut être interne ou externe.

Un tel moyen pour paramétrer peut être distinct ou, et de préférence, confondu avec le moyen 54, mentionné ci-dessus, et conçu pour paramétrer au moins une valeur seuil de référence (Vseuil1 ; Vseuil2).

L'équipement dynamique 1 comporte un générateur photovoltaïque 3 ainsi qu'une batterie 4, alimentée par ce générateur photovoltaïque 3, et alimentant en énergie électrique le système dynamique 2. Tel que mentionné ci-dessus, cet équipement dynamique 1 peut, également, comporter une source de tension externe (par exemple une alimentation secteur ou une batterie de secours) conçue pour alimenter le système dynamique 2 lorsque la quantité d'énergie stockée dans la batterie 4 est insuffisante pour actionner ce système dynamique 2.

Dans un pareil cas, l'équipement dynamique 1 comporte, encore, un moyen 7 pour protéger le moyen 56 pour isoler électriquement le générateur photovoltaïque 3 et/ou une partie au moins du moyen 57 pour déterminer une valeur numérique Ipv correspondant à au moins un relevé de courant de court-circuit Icc (plus particulièrement le convertisseur courant-tension 570), ceci lorsque le courant de court circuit Icc atteint une valeur destructive pour ce moyen 56 pour isoler électriquement le générateur photovoltaïque 3 et/ou pour une partie au moins de ce moyen 57 pour déterminer une valeur numérique Ipv.

En fait, ce moyen 7 pour protéger est, plus particulièrement, conçu pour assurer la protection de ce moyen 56 pour isoler électriquement le générateur photovoltaïque 3 et/ou de cette partie au moins du moyen 57 pour déterminer une valeur numérique Ipv, ceci lorsque le courant de court circuit Icc est supérieur à une valeur de consigne définie.

Selon un mode de réalisation préféré cette valeur de consigne est définie pour être, d'une part, supérieure au courant maximum délivrable par le générateur photovoltaïque 3 et, d'autre part, inférieure au courant destructif du moyen 56 pour isoler électriquement le générateur photovoltaïque 3 et/ou d'une partie au moins du moyen 57 pour déterminer une valeur numérique Ipv.

Selon un mode de réalisation préféré de l'invention, ce moyen 7 pour protéger est constitué par un circuit de protection, interposé entre le moyen 56 pour isoler le générateur photovoltaïque 3 et le moyen 59 pour commander ce moyen 56 pour isoler.

Aussi, lorsque le moyen 56 pour isoler le générateur photovoltaïque 3 est au moins en partie constitué par un relais électromécanique, ce moyen 57 pour protéger (plus particulièrement le circuit de protection) est conçu pour limiter le courant de court circuit Icc (notamment en écrêtant ce courant de court-circuit Icc) ce qui a pour effet d'interrompre (au moins pendant une durée donnée, notamment quelques minutes) la commande, par le moyen de commande 59, de ce moyen 56 pour isoler le générateur photovoltaïque 3, ceci lorsque le courant de court circuit Icc est supérieur à une valeur de consigne définie.

Cependant, lorsque ce moyen 56 pour isoler comporte une diode à très faible courant de fuite ainsi qu'un transistor de commutation, le moyen 7 pour protéger (plus particulièrement le circuit de protection) est conçu pour limiter la conduction de ce moyen 56 pour isoler (plus particulièrement pour limiter la conduction du transistor que comporte ce moyen 56), ceci lorsque le courant de court circuit Icc est supérieur à une valeur de consigne définie.

En fait, ce circuit de protection (constituant le moyen 7 de protection) peut, alors, comporter une boucle de contre-réaction agissant sur ce transistor de commutation.

Le dispositif de pilotage 5 comporte, également, un moyen 8 pour sélectionner, soit une partie au moins du moyen 51 pour déterminer une valeur numérique Vpv correspondant à une tension à vide Vo relevée (plus particulièrement le diviseur de tension 511), soit une partie au moins du moyen 57 pour déterminer une valeur numérique Ipv (plus particulièrement le convertisseur courant-tension 570, voire l'amplificateur 572) correspondant à au moins un relevé de courant de court-circuit Icc.

Ce moyen 8 pour sélectionner est interposé entre le générateur photovoltaïque 3 et un moyen (510 ; 571) pour convertir un signal analogique en un signal numérique.

La présence de ce moyen de sélection 8 permet, avantageusement, au dispositif de pilotage 5 de comporter un unique moyen (510 ; 571) pour convertir un signal analogique en un signal numérique auquel est transmis un signal analogique correspondant, selon le cas, à une tension à vide Vo ou à un courant de court-circuit Icc, ceci sous l'impulsion de ce moyen de sélection 8.

Un mode particulier de réalisation consiste en ce que ce moyen pour sélectionner 8 est constitué par un multiplexeur analogique, un sélecteur de canal ou analogue.

Tel que mentionné ci-dessus, le dispositif de pilotage 5 comporte un moyen 59 pour commander au moins ledit moyen pour 56 isoler électriquement, ledit moyen 57 pour déterminer une valeur numérique Ipv ainsi que ledit moyen 58 pour comparer.

Selon une caractéristique additionnelle, ce moyen 59 pour commander peut, encore, être conçu pour commander également le moyen 8 pour sélectionner, voire encore le moyen 7 pour protéger le moyen 56 pour isoler électriquement le générateur photovoltaïque 3.

Un tel moyen pour commander est, de préférence, constitué par un séquenceur de mesure.

Une autre caractéristique du dispositif de pilotage 5 consiste en ce qu'il comporte un unique convertisseur analogique-numérique (510 ; 571) constituant, avantageusement, d'une part, une partie au moins du moyen 51 pour déterminer une valeur numérique Vpv correspondant à une tension à vide Vo relevée et, d'autre part, une partie au moins du moyen 57 pour déterminer une valeur numérique Ipv correspondant à au moins un relevé de courant de court-circuit Icc.

Encore une autre caractéristique consiste en ce que ce dispositif de pilotage 5 comporte un unique comparateur constituant, avantageusement, d'une part, le moyen 52 pour comparer, à au moins une valeur seuil de référence (Vseuil1 ; Vseuil2), une valeur numérique déterminée Vpv correspondant à la tension à vide Vo relevée et, d'autre part, le moyen 58 pour comparer, à au moins une valeur seuil de référence (Iseuil1 ; Iseuil2), une valeur numérique déterminée Ipv correspondant à au moins un relevé de courant de court-circuit Icc.

De manière additionnelle, le dispositif de pilotage 5 comporte un unique séquenceur de mesure constituant, avantageusement, les moyens (53 ; 59) pour commander au moins :
- les moyens (50 ; 56) pour isoler électriquement le générateur photovoltaïque 3 par rapport à la batterie 4 ;
- le moyen 8 pour sélectionner soit une partie au moins du moyen 51 pour déterminer une valeur numérique Vpv correspondant à une tension à vide Vo relevée, soit une partie au moins du moyen 57 pour déterminer une valeur numérique Ipv correspondant à au moins un relevé de courant de court-circuit Icc ;
- le moyen 51 pour déterminer une valeur numérique Vpv correspondant à une tension à vide Vo relevée ;
- le moyen 52 pour comparer cette valeur numérique déterminée Vpv à au moins une valeur seuil de référence (Vseuil1 ; Vseuil2);
- le moyen 57 pour déterminer une valeur numérique Ipv correspondant à au moins un relevé de courant de court-circuit Icc;
- le moyen 58 pour comparer cette valeur numérique déterminée Ipv à au moins une valeur seuil de référence (Iseuil1 ; Iseuil2).

De manière additionnelle, un tel séquenceur de mesure constitue, encore, les moyens 59 pour commander le moyen 7 pour protéger le moyen 56 pour isoler électriquement le générateur photovoltaïque 3.

Finalement, le dispositif de pilotage 5 comporte un microcontrôleur 6 intégrant au moins le moyen 8 pour sélectionner, le convertisseur analogique-numérique (510 ; 571), le comparateur (52 ; 58) ainsi que le séquenceur de mesure (53 ; 59).

De manière additionnelle, ce microcontrôleur 6 intègre, encore, au moins un moyen 54 pour paramétrer au moins une valeur seuil de référence (Vseuill, Vseuil2 ; Iseuil1, Iseuil2), plus particulièrement constitué par une mémoire incorporant au moins une valeur seuil de référence paramétrable (Vseuil1, Vseuil2 ; Iseuil1, Iseuil2).

## Revendications

1. Procédé pour le pilotage, en fonction de l'ensoleillement, d'un système dynamique (2) que comporte un équipement dynamique (1) lequel comporte encore au moins un générateur photovoltaïque (3), au moins une batterie (4) pour le stockage de l'énergie électrique fournie par le générateur photovoltaïque (3) et pour l'alimentation en énergie électrique d'un système dynamique (2) ainsi qu'au moins un dispositif (5) pour le pilotage de cet équipement dynamique (1), **caractérisé par le fait que** ce procédé consiste en ce que :
- on isole électriquement le générateur photovoltaïque (3) par rapport à la batterie (4);
- on relève la tension à vide (vo) du générateur photovoltaïque (3);
- à partir de la tension à vide relevée (Vo), on détermine une valeur numérique (Vpv) correspondant à cette tension à vide relevée (Vo) et on compare cette valeur numérique déterminée (Vpv) à au moins une valeur seuil de référence (Vseuil1 ; Vseuil2) ;
- lorsque cette valeur numérique déterminée (Vpv) correspond à une gamme de valeurs limitée par au moins une telle valeur seuil de référence (Vseuill ; Vseuil2), on pilote le système dynamique (2) pour lui conférer une configuration correspondant à cette gamme de valeurs.

2. Procédé selon la revendication 1, **caractérisé par le fait qu'**on isole le générateur photovoltaïque (3), on relève la tension à vide (Vo), on détermine la valeur numérique (Vpv) correspondant à cette tension à vide relevée (Vo) et on compare cette valeur numérique déterminée (Vpv) à au moins une valeur seuil de référence (Vseuil1 ; Vseuil2), ceci à intervalles déterminés et/ou réguliers.

3. Procédé selon l'une quelconque des revendications 1 ou 2, **caractérisé par le fait que**, lorsqu'on détermine une valeur numérique (Vpv) correspondant à une tension à vide relevée (Vo), on convertit en valeur numérique une tension correspondant, soit à la tension à vide relevée (Vo), soit à une fraction de cette tension à vide relevée (Vo).

4. Procédé selon l'une quelconque des revendications précédentes, **caractérisé par le fait que**, avant de comparer la valeur numérique déterminée (Vpv) à au moins une valeur seuil de référence (Vseuil1 ; Vseuil2), on paramètre une telle valeur seuil de référence (Vseuill ; Vseuil2), voire on enregistre encore une telle valeur seuil de référence (Vseuil1 ; Vseuil2) dans une mémoire.

5. Procédé selon l'une quelconque des revendications précédentes, **caractérisé par le fait que**, lorsqu'on relève la tension à vide (Vo) du générateur photovoltaïque, on relève également la température du dispositif de pilotage (5) et, soit on pilote le système dynamique (2) lorsque cette température est supérieure à une température seuil (Ts), soit on inhibe le pilotage de ce système dynamique (2) lorsque cette température est inférieure à cette température seuil (Ts).

6. Procédé selon l'une quelconque des revendications précédentes, **caractérisé par le fait qu'**on inhibe le pilotage du système dynamique (2) à l'intérieur d'au moins une plage horaire prédéfinie.

7. Procédé selon l'une quelconque des revendications précédentes, **caractérisé par le fait que**, d'une part, lorsque la valeur numérique déterminée (Vpv) est inférieure à une valeur seuil de référence (Vseuil1), on pilote le système dynamique (2) pour lui conférer une première configuration, et, d'autre part, lorsque la valeur numérique déterminée (Vpv) est supérieure à une valeur seuil de référence (Vseuil2), on pilote le système dynamique (2) pour lui conférer une deuxième configuration.

8. Equipement dynamique (1), notamment pour la mise en oeuvre du procédé selon l'une quelconque des revendications précédentes, comportant un système dynamique (2), un générateur photovoltaïque (3), une batterie (4) alimentée en énergie électrique par le générateur photovoltaïque (3) et alimentant en énergie électrique le système dynamique (2), au moins un dispositif (5) pour piloter l'équipement dynamique (1) en fonction de l'ensoleillement, **caractérisé par le fait que** le dispositif (5) pour piloter l'équipement dynamique (1) comporte au moins :
- un moyen (50) pour isoler électriquement le générateur photovoltaïque (3) par rapport à la batterie (4) ;
- un moyen pour relever la tension à vide (Vo) du générateur photovoltaïque (3) ;
- un moyen (51) pour déterminer une valeur numérique (Vpv) correspondant à cette tension à vide relevée (Vo) ;
- un moyen (52) pour comparer cette valeur numérique déterminée (Vpv) à au moins une valeur seuil de référence (Vseuill ; Vseuil2);
- un moyen (53) pour commander au moins le moyen (50) pour isoler électriquement, le moyen (51) pour déterminer une valeur numérique (Vpv) ainsi que le moyen (52) pour comparer ;
- un moyen pour piloter le système dynamique (2) en fonction du résultat de la comparaison entre cette valeur numérique déterminée (Vpv) et au moins une telle valeur seuil de référence (Vseuil1 ; Vseuil2).

9. Equipement dynamique (1) selon la revendication 8, **caractérisé par le fait que** le moyen (50) pour isoler électriquement le générateur photovoltaïque (3) est au moins en partie constitué par un relais électromécanique, interposé entre le générateur photovoltaïque (3) et la batterie (4), et comportant un contact repos ainsi qu'une bobine alimentée par la batterie (4).

10. Equipement dynamique (1) selon la revendication 8, **caractérisé par le fait que** le moyen (50) pour isoler électriquement le générateur photovoltaïque (3) est au moins en partie constitué par une diode à très faible courant de fuite interposée entre le générateur photovoltaïque (3) et la batterie (4).

11. Equipement dynamique (1) selon l'une quelconque des revendications 8 à 10, **caractérisé par le fait que** le moyen (51) pour déterminer une valeur numérique (Vpv) correspondant à la tension à vide (Vo) relevée comporte au moins un moyen (510) pour convertir un signal analogique, correspondant à la tension à vide (Vo) relevée, en un signal numérique correspondant à cette tension à vide (Vo) relevée.

12. Equipement dynamique (1) selon la revendication 11, **caractérisé par le fait que** le moyen (51) pour déterminer une valeur numérique (Vpv) comporte, encore, un diviseur de tension (511), interposé entre le générateur photovoltaïque (3) et le moyen (510) pour convertir un signal analogique en un signal numérique.

13. Equipement dynamique (1) selon l'une quelconque des revendications 8 à 12, **caractérisé par le fait que** le moyen (53) pour commander est conçu pour commander, à intervalles déterminés et/ou réguliers, le moyen (50) pour isoler électriquement, le moyen (51) pour déterminer une valeur numérique (Vpv) et le moyen (52) pour comparer, voire encore le moyen pour relever et/ou le moyen pour piloter.

14. Equipement dynamique (1) selon l'une quelconque des revendications 8 à 13, **caractérisé par le fait qu'**il comporte au moins un moyen (54) pour paramétrer au moins une valeur seuil de référence (Vseuil1 ; Vseuil2) constitué, soit par une mémoire incorporant au moins une valeur seuil de référence paramétrable (Vseuil1 ; Vseuil2), soit par un potentiomètre ajustable ou analogue.

15. Equipement dynamique (1) selon l'une quelconque des revendications 8 à 14, **caractérisé par le fait qu'**il comporte un microcontrôleur (6) intégrant au moins une partie du moyen (51) pour déterminer une valeur numérique (Vpv) correspondant à la tension à vide (Vo) et/ou le moyen (52) pour comparer cette valeur numérique déterminée (Vpv) à au moins une valeur seuil de référence (Vseuil1 ; Vseuil2), voire et selon le cas, le moyen pour commander (53) et/ou la mémoire incorporant au moins une valeur seuil de référence paramétrable (Vseuill ; Vseuil2).

16. Equipement dynamique (1) selon l'une quelconque des revendications 8 à 15, **caractérisé par le fait qu'**il comporte un moyen pour relever la température du dispositif (5) pour piloter l'équipement dynamique (1).

17. Equipement dynamique (1) selon l'une quelconque des revendications 8 à 16, **caractérisé par le fait qu'**il comporte un moyen (55) pour inhiber le pilotage du système dynamique (2) à l'intérieur d'au moins une plage horaire prédéfinie.

## Patentansprüche

1. Verfahren zum Steuern, in Abhängigkeit von der Sonnenstrahlung, eines dynamischen Systems (2), welches eine dynamische Ausrüstung (1) umfasst, die ebenfalls mindestens ein Photovoltaik-Generator (3), mindestens eine Batterie (4) zum Speichern der von dem Photovoltaik-Generator (3) gelieferten elektrischen Energie und zum Zuführen von elektrischer Energie zu einem dynamischen System (2) sowie mindestens eine Vorrichtung (5) zum Steuern dieser dynamischen Ausrüstung (5) umfasst, **dadurch gekennzeichnet, dass** dieses Verfahren darin besteht, dass:
- der Photovoltaik-Generator (3) elektrisch von der Batterie (4) isoliert wird;
- die Leerlaufspannung (Vo) des Photovoltaik-Generators (3) aufgenommen wird;
- ab der aufgenommenen Leerlaufspannung (Vo) ein numerischer Wert (Vpv), der dieser Leerlaufspannung (Vo) entspricht, bestimmt wird und dieser bestimmte numerische Wert (Vpv) mit mindestens einem Bezugschwellenwert (Vseuil1; Vseuil2) verglichen wird;
- wenn dieser bestimmte numerische Wert (Vpv) einem durch zumindest einen solchen Bezugschwellenwert (Vseuil1; Vseuil2) begrenzten Bereich von Werten entspricht, das dynamische System (2) gesteuert wird, um ihm eine Konfiguration zu verleihen, die diesem Bereich von Werten entspricht.

2. Verfahren nach Anspruch 1, **dadurch gekennzeichnet, dass** der Photovoltaik-Generator (3) isoliert wird, die Leerlaufspannung (Vo) aufgenommen wird, der numerische Wert (Vpv), der dieser aufgenommenen Leerlaufspannung (Vo) entspricht, bestimmt wird und dieser bestimmte numerische Wert (Vpv) mit mindestens einem Bezugsschwellenwert (Vseuil1; Vseuil2) verglichen wird, und zwar in bestimmten und/oder regelmäßigen Abständen.

3. Verfahren nach irgendeinem der Ansprüche 1 oder 2, **dadurch gekennzeichnet, dass**, wenn ein numerischer Wert (Vpv), der einer aufgenommenen Leerlaufspannung (Vo) entspricht, bestimmt wird, eine Spannung, die entwerder der aufgenommenen Leerlaufspannung (Vo) oder einer Fraktion dieser Leerlaufspannung (Vo) entspricht, in einen numerischen Wert umgewandelt wird.

4. Verfahren nach irgendeinem der vorgehenden Ansprüche, **dadurch gekennzeichnet, dass** bevor der bestimmte numerische Wert (Vpv) mit mindestens einem Bezugsschwellenwert (Vseuil1; Vseuil2) verglichen wird, ein solcher Bezugsschwellwert (Vseuill; Vseuil2) parametrisiert wird, sogar auch ein solcher Bezugschwellenwert (Vseuill Vseuil2) in einen Speicher gespeichert wird.

5. Verfahren nach irgendeinem der vorgehenden Ansprüche, **dadurch gekennzeichnet, dass**, wenn die Leerlaufspannung (Vo) des Photovoltaik-Generators aufgenommen wird, auch die Temperatur der Steuervorrichtung (5) aufgenommen wird und entweder das dynamische System (2) gesteuert wird, wenn diese Temperatur höher als ein Schwellentemperatur (Ts) ist, oder die Steuerung dieses dynamischen Systems (2) verhindert wird, wenn diese Temperatur niedriger als diese Schwellentemperatur (Ts) ist.

6. Verfahren nach irgendeinem der vorgehenden Ansprüche, **dadurch gekennzeichnet, dass** die Steuerung des dynamischen Systems (2) innerhalb von mindestens einem vorbestimmten Zeitfenster verhindert wird.

7. Verfahren nach irgendeinem der vorgehenden Ansprüche, **dadurch gekennzeichnet, dass**, einerseits, wenn der bestimmte numerische Wert (Vpv) kleiner als ein Bezugschwellenwert (Vseuil1) ist, das dynamische System (2) gesteuert wird, um ihm eine erste Konfiguration zu verleihen und, andererseits, wenn der bestimmte numerische Wert (Vpv) größer als ein Bezugschwellenwert (Vseuil2) ist, das dynamische System (2) gesteuert wird, um ihm eine zweite Konfiguration zu verleihen.

8. Dynamische Ausrüstung (1), nämlich zur Durchführung des Verfahrens nach irgendeinem der vorgehenden Ansprüche, umfassend ein dynamisches System (2), einen Photovoltaik-Generator (3), eine von dem Photovoltaik-Generator (3) mit elektrischer Energie versorgte Batterie (4), die das dynamische System (2) mit elektrischer Energie versorgt, mindestens eine Vorrichtung (5), um diese dynamische Ausrüstung (1) abhängig von der Sonnenstrahlung zu steuern, **dadurch gekennzeichnet, dass** die Vorrichtung (5) zur Steuerung der dynamischen Ausrüstung (1) mindestens Folgendes umfasst:
- ein Mittel (50), um den Photovoltaik-Generator (3) bezüglich der Batterie (3) elektrisch zu isolieren;
- ein Mittel, um die Leerlaufspannung (Vo) des Photovoltaik-Generators (3) aufzunehmen;
- ein Mittel (51), um einen numerischen Wert (Vpv) zu bestimmen, der dieser aufgenommenen Leerlaufspannung (Vo) entspricht;
- ein Mittel (52), um diesen bestimmten numerischen Wert (Vpv) mit mindestens einem Bezugschwellenwert (Vseuil1; Vseuil2) zu vergleichen;
- ein Mittel (53), um zumindest das Mittel (50) zur elektrischen Isolierung, das besagte Mittel (51) zum Bestimmen eines numerischen Werts (Vpv) sowie das besagte Mittel (52) zum Vergleichen zu steuern;
- ein Mittel, um das dynamische System (2) abhängig von dem Ergebnis des Vergleichs zwischen diesem bestimmten numerischen Wert (Vpv) und zumindest einem solchen Bezugschwellenwert (Vseuil1; Vseuil2) zu steuern.

9. Dynamische Ausrüstung (1) nach Anspruch 8, **dadurch gekennzeichnet, dass** das Mittel (50), um den Photovoltaik-Generator (3) elektrisch zu isolieren, zumindest teilweise aus einem elektromechanischen Relais besteht, der zwischen dem Photovoltaik-Generator (3) und die Batterie (4) angeordnet ist, und einen Ruhekontakt sowie eine von der Batterie (4) mit Strom versorgte Spule umfasst.

10. Dynamische Ausrüstung (1) nach Anspruch 8, **dadurch gekennzeichnet, daß** das Mittel (50) zum elektrischen Isolieren des Photovoltaikgenerators (3) zumindest teilweise aus einemr Diode mit sehr niedrigem Leckstrom besteht, die zwischen dem Photovoltaik-Generator (3) und der Batterie (4) angeordnet ist.

11. Dynamische Ausrüstung (1) nach irgendeinem der Ansprüche 8 bis 10, **dadurch gekennzeichnet, dass** das Mittel (51) zum Bestimmen eines numerischen Werts (Vpv), der der aufgenommenen Leerlaufspannung (Vo) entspricht, mindestens ein Mittel (510) umfasst, um ein analoges Signal, das der aufgenommenen Leerlaufspannung (Vo) entspricht, in ein digitales Signal umzuwandeln, das dieser aufgenommenen Leerlaufspannung (Vo) entspricht.

12. Dynamische Ausrüstung (1) nach Anspruch 11, **dadurch gekennzeichnet, dass** das Mittel (51) zum Bestimmen eines numerischen Werts (Vpv) auch einen Spannungsteiler (511) umfasst, der zwischen dem Photovoltaik-Generator (3) und dem Mittel (510) zum Umwandeln eines analogen Signals in ein digitales Signal angeordnet ist.

13. Dynamische Ausrüstung (1) nach irgendeinem der Ansprüche 8 bis 12, **dadurch gekennzeichnet, dass** das Mittel (53) zum Steuern vorgesehen ist, um in bestimmten und/oder regelmäßigen Abständen das Mittel (50) zur elektrischen Isolierung, das Mittel (51) zum Bestimmen eines numerischen Werts (Vpv) und das Mittel (52) zum Vergleichen, sogar auch das Mittel zum Aufnehmen und/oder das Mittel zum Steuern zu steuern.

14. Dynamische Ausrüstung (1) nach irghendeinem der Ansprüche 8 bis 13, **dadurch gekennzeichnet, dass** sie mindestens ein Mittel (54), um mindestens einen Bezugschwellenwert (Vseuil1; Vseuil2) zu parametrisieren, umfaßt, das entweder aus einem Speicher, der mindestens einen parametrisierbaren Bezugschwellenwert (Vseuil1; Vseuil2) umfasst, oder aus einem einstellbaren Potentiometer oder dergleichen besteht.

15. Dynamische Ausrüstung (1) nach irgendeinem der Ansprüche 8 bis 14, **dadurch gekennzeichnet, dass** sie einen Mikrokontroller (6) umfasst, der wenigstens einen Teil des Mittels (51) zum Bestimmen eines numerischen Werts (Vpv), der der Leerlaufspannung (Vo) entspricht, und/oder das Mittel (52), um diesen bestimmten numerischen Wert (Vpv) mit mindestens einem Bezugschwellenwert (Vseuil1; Vseuil2) zu vergleichen, sogar und je nach dem Fall, das Mittel zur Steuerung (53) und/oder den Speicher, der mindestens einen Bezugschwellenwert (Vseuil1; Vseuil2) umfasst, umfasst.

16. Dynamische Ausrüstung (1) nach irgendeinem der Ansprüche 8 bis 15, **dadurch gekennzeichnet, dass** sie ein Mittel zur Aufnahme der Temperatur der Vorrichtung (5) umfasst, um die dynamische Ausrüstung (1) zu steuern.

17. Dynamische Ausrüstung (1) nach irgendeinem der Ansprüche 8 bis 16, **dadurch gekennzeichnet, dass** sie ein Mittel (55) zum Verhindern der Steuerung des dynamischen Systems (2) innerhalb von mindestens einem vordefinierten Zeitfenster umfasst.

## Claims

1. A method for controlling, depending on the sunshine, a dynamic system (2) a dynamic equipment (1) comprises, which also comprises at least one photovoltaic generator (3), at least one battery (4) for storing the electrical energy supplied by the photovoltaic generator (3) and for supplying electrical energy to a dynamic system (2) as well as at least one device (5) for controlling the dynamic equipment (1), wherein this method consists in that:
- the photovoltaic generator (3) is electrically insulated from the battery (4);
- the no-load voltage (Vo) of the photovoltaic generator (3) is recorded;
- based on the recorded no-load voltage (Vo), a digital value (Vpv) corresponding to this no-load voltage (Vo) is determined and this determined digital value (Vpv) is compared with at least one reference threshold value (Vseuil1; Vseuil2);
- when this determined digital value (Vpv) corresponds to a range of values limited by at least one such reference threshold value (Vseuil1; Vseuil2), the dynamic system (2) is controlled in order to impart to same a pattern corresponding to this range of values.

2. A method according to claim 1, wherein the photovoltaic generator (3) is insulated, the no-load voltage (Vo) is recorded, the digital value (Vpv) corresponding to this recorded no-load voltage (Vo) is determined and this determined digital value (Vpv) is compared with at least one reference threshold value (Vseuill; Vseuil2), this at determined and/or regular time intervals.

3. A method according to any of claims 1 or 2, wherein, when a digital value (Vpv) corresponding to a recorded no-load voltage (Vo) determined, a voltage corresponding either to the recorded no-load voltage (Vo) or a fraction of this recorded no-load voltage (Vo) is converted into a digital value.

4. A method according to any of the preceding claims, wherein, before comparing the determined digital value (Vpv) with at least one such reference threshold value (Vseuil1; Vseuil2), such a reference threshold value (Vseuil1; Vseuil2) is parameterized, even such a reference threshold value (Vseuil1; Vseuil2) is recorded in a memory.

5. A method according to any of the preceding claims, wherein, when the no-load voltage (Vo) of the photovoltaic generator is recorded, the temperature of the control device (5) is also recorded and either the dynamic system (2) is controlled, when this temperature is higher than a threshold temperature (Ts) or the control of this dynamic system (2) is inhibited, when this temperature is lower than this threshold temperature (Ts).

6. A method according to any of the preceding claims, wherein the control of this dynamic system (2) is inhibited within at least one predefined time slot.

7. A method according to any of the preceding claims, wherein, on the one hand, when the determined digital value (Vpv) is lower than a reference threshold value (Vseuil1), the dynamic system (2) is controlled such as to impart to same a first configuration and, on the other hand, when the determined digital value (Vpv) is higher than a reference threshold value (Vseuil2), the dynamic system (2) is controlled such as to impart to same a second configuration.

8. A dynamic equipment (1), namely for implementing the method according to any of the preceding claims, including a dynamic system (2), a photovoltaic generator (3), a battery (4) supplied with electric energy by the photovoltaic generator (3) and supplying electrical energy to the dynamic system (2), at least one device (5) for controlling the dynamic device (1) depending on the sunshine, wherein the device (5) for controlling the dynamic equipment (1) comprises at least:
- a means (50) for electrically insulating the photovoltaic generator (3) with respect to the battery (4);
- a means for recording the no-load voltage (Vo) of the photovoltaic generator (3);
- a means (51) for determining a digital value (Vpv) corresponding to this recorded no-load voltage (Vo);
- a means (52) for comparing this determined digital value (Vpv) with at least one reference threshold value (Iseuil1; Iseuil2);
- a means (53) for controlling at least the means (50) for electrically insulating, the means (51) for determining a digital value (Vpv) as well as the means (52) for comparing;
- a means for controlling the dynamic system (2) based on the result of the comparison between this determined digital value (Vpv) and at least one such reference threshold value (Iseuill; Iseuil2).

9. A dynamic equipment (1) according to claim 8, wherein the means (50) for electrically insulating the photovoltaic generator (3) is formed at least partly by an electromechanical relay, interposed between the photovoltaic generator (3) and the battery (4), and including a resting contact as well a coil supplied with power by the battery (4).

10. A dynamic equipment (1) according to claim 8, wherein the means (50) for electrically insulating the photovoltaic generator (3) is formed at least partly by a diode with very low leakage current interposed between the photovoltaic generator (3) and the battery (4).

11. A dynamic equipment (1) according to any of claims 8 to 10, wherein the means (51) for determining a digital value (Vpv) corresponding to the recorded no-load voltage (Vo) includes at least one means (510) for converting an analog signal corresponding to the recorded no-load voltage (Vo) into a digital signal corresponding to this recorded no-load voltage (Vo).

12. A dynamic equipment (1) according to claim 11, wherein the means (51) for determining a digital value (Vpv) also includes a voltage divider (511), interposed between the photovoltaic generator (3) and means (510) for converting an analog signal into a digital signal.

13. A dynamic equipment (1) according to any of claims 8 to 12, wherein the means (53) for controlling is designed such as to control, at determined and/or regular intervals, the means (50) for electrically insulating, the means (51) for determining a digital value (Vpv) and the means (52) for comparing, even the means for recording and/or the means for controlling.

14. A dynamic equipment (1) according to any of claims 8 to 13, wherein it includes at least one means (54) for parameterizing at least one reference threshold value (Vseuil1; Vseuil2) formed either of a memory including at least one parameterizable reference threshold value (Vseuil1; Vseuil2), or of an adjustable potentiometer or the like.

15. A dynamic equipment (1) according to any of claims 8 to 14, wherein it includes a microcontroller (6) incorporating at least part of the means (51) for determining a digital value (Vpv) corresponding to the no-load voltage (Vo) and/or the means (52) for comparing this determined digital value (Vpv) with at least one reference threshold value (Vseuil1; Vseuil2), even and as the case may be, the means for controlling (53) and/or the memory incorporating at least one parameterizable reference threshold value (Vseuil1 ; Vseuil2).

16. A dynamic equipment (1) according to any of claims 8 to 15, wherein it includes a means for recording the temperature of the device (5) for controlling the dynamic equipment (1).

17. A dynamic equipment (1) according to any of claims 8 to 16, wherein it includes a means (55) for inhibiting the control of the dynamic system (2) within at least one predefined time slot.
